# EUROPÄISCHE PATENTSCHRIFT

(11) **EP 1 790 910 B1**
(45) Veröffentlichungstag und Bekanntmachung des Hinweises auf die Patenterteilung: **09.01.2013**
(21) Anmeldenummer: 06018072.6
(22) Anmeldetag: 30.08.2006
(51) Int. Cl.: F24C 14/02, F24C 15/20, B01J 35/00, B01D 53/88

(54) **Katalysatoreinrichtung für ein Haushaltsgerät**
Catalyser device for a household appliance
Dispositif catalyseur pour appareil ménager

(30) Priorität: 24.11.2005 DE 102005056034
(43) Veröffentlichungstag der Anmeldung: 30.05.2007
(73) Patentinhaber: Electrolux Home Products Corporation N.V., 1130 Brussel (BE)
(72) Erfinder: Tomaselli, Carlo, Farra di Soligo 31010 Treviso (IT)
(74) Vertreter: Baumgartl, Gerhard Willi

(56) Entgegenhaltungen:
- EP-A- 0 209 887
- EP-A- 0 978 690
- EP-A- 1 160 514
- EP-A- 1 376 016
- DE-A1- 3 636 622
- US-A- 2 846 557

## Beschreibung

Die Erfindung betrifft eine Katalysatoreinrichtung für ein Haushaltsgerät, eine Katalysatoranordnung und ein Haushaltsgerät mit einer Katalysatoreinrichtung, sowie ein Verfahren zum Herstellen einer Katalysatoreinrichtung.

Aus der DE 28 11 650 A1 ist ein katalytischer Nachverbrenner für einen Backofen bekannt, bei dem ein Katalysatorträger mit einer Vielzahl von Luftkanälen durchsetzt ist. Zur Erreichung der katalytischen Wirkung des Nachverbrenners muss der Katalysatorträger auf eine Arbeitstemperatur geheizt werden. Dazu ist spiralförmig um den Katalysatorträger eine Heizwendel angeordnet. Nach dem Einschalten der Heizwendel vergeht eine beträchtliche Zeit, bis der thermisch schlecht leitende Katalysatorträger vollständig aufgeheizt ist und seine volle Wirkung entfaltet. Während dieser Aufheizzeit können Gerüche aus dem Backofen entweichen und zur Erwärmung des Katalysators ist eine hohe Heizleistung erforderlich.

Bei der DE 35 26 187 A1 ist ein elektrisches Heizelement in ein Katalysatorgranulat eingebettet, so dass die Zeit bis zur Erreichung der Betriebstemperatur des Katalysatorgranulats verkürzt ist. Es wird hier jedoch keine gleichmäßige Temperaturverteilung im Granulat erreicht und es ist ein hoher mechanischer Aufwand erforderlich, um das Heizelement dauerhaft mit dem fließfähigen Granulat zu umgeben.

Aus der DE 196 38 665 A1 ist ein mehrteiliger Katalysator bekannt, bei dem zwischen zwei Teillagen von Katalysatorschichten ein Neutralfilter eingebetet ist. Der im Backofen zu dessen Erhitzung vorhandene Heizkörper erwärmt die durch den Katalysator abgesaugte Luft, die dann wiederum den Katalysator auf seine Arbeitstemperatur aufheizt. Auch hier ergibt sich eine Verzögerung bis der Katalysator seine Betriebstemperatur erreicht und die Temperatur des Katalysators kann nicht unabhängig von der Backofentemperatur eingestellt werden.

Beim Ofen der EP 1 376 016 A2 ist innerhalb des Ofenraums ein Heizelement mit Katalysatoreigenschaften vorgesehen. Dazu ist das elektrische Heizelement mit einem Katalysator beschichtet, beispielsweise mit Platin, Palladium oder andere. Das Heizelement kann ein Band, ein Draht, eine Folie oder in Lampenform sein. Zur flächigen Abdeckung in einer Ebene kann das Heizelement mäanderförmig ausgebildet sein.

Es ist Aufgabe der Erfindung, eine Katalysatoreinrichtung, eine Katalysatoranordnung sowie ein Haushaltsgerät mit einer Katalysatoreinrichtung vorzusehen, bei denen die katalytische Wirkung zur chemischen Umwandlung von gasförmigen Stoffen innerhalb kürzester Zeit nach dem Start der Aufheizung erreicht wird und die Katalysatoreinrichtung kompakt baut. Weiterhin ist es Aufgabe ein Verfahren zur Herstellung einer solchen Katalysatoreinrichtung bereit zu stellen.

Diese Aufgabe wird mit den Merkmalen des Anspruchs 117, 22 bzw. 25 gelöst.

Vorteilhafte Ausgestaltungen sind Gegenstand von Unteransprüchen.

Gemäß Anspruch 1 wird eine Katalysatoreinrichtung für ein Haushaltsgerät mit einer Katalysatorstruktur vorgeschlagen, bei der die Katalysatorstruktur selbst ein Heizelement ist. Gleichzeitig weist die Katalysatorstruktur zumindest an ihrer Oberfläche eine Vielzahl von katalytisch wirkenden Elementen oder eine katalytisch wirksame Oberflächenbeschichtung auf, so dass sich die Katalysatorstruktur nur selbst aufheizen muss, um eine katalytische Umsetzung an ihrer Oberfläche bei der geeigneten Katalysatortemperatur zu bewirken. Die Zeit bis zum Erreichen der geeigneten Katalysatortemperatur ist drastisch reduziert, da bereits mit dem Aufheizen durch das Heizelement die volle katalytische Wirkung verzögerungsfrei entfaltet wird. Der Energieaufwand für den Katalysator ist minimal, da keine unnötigen Massen erwärmt werden müssen und auch keine Wärmeabfuhr an katalytisch nicht wirksamen Oberflächen stattfindet, beispielsweise durch Erwärmung der durchströmenden Luft in katalytisch unwirksamen Teilen der Katalysatoreinrichtung. Weiterhin ist der Platzbedarf für die Katalysatoreinrichtung minimal, da nur unmittelbar funktional am Katalyseprozess mitwirkende Elemente benötigt werden. Eine Vielzahl von katalytisch wirksamen Elementen sind beispielsweise eine katalytisch wirksame Substanz wie Palladium und/oder Platin, die in Form einer Vielzahl von Clustern oder dergleichen in eine Matrix eingebettet ist. Die Cluster sind beispielsweise in eine Keramikmatrix oder eine Metallmatrix eingebettet, wobei letztere aus einem anderen Metall als die katalytische Substanz besteht.

Durch das Vorsehen der katalytisch aktiven Komponenten in Pulverform oder das Ausbilden der Heiz- und katalytisch wirksamen Struktur als volles Material aus einem pulverförmigen Ausgangsgemisch wird das Entstehen von thermischen Spannungen zwischen den elektrisch leitenden Anteilen und den katalytisch aktiven Anteilen stark herabgesetzt, so dass durch die Aufheiz- und Abkühlphasen keine Materialschädigungen aufgrund des thermischen Stresses entstehen. Zur Reduzierung der thermischen Spannungen und/oder zur Verbesserung der Haftung wird vorteilhaft ein Haftvermittler verwendet, der beispielsweise die katalytisch wirksamen Partikel matrixartig einbindet und gleichzeitig eine Verbindung zum metallischen Träger herstellt.

Ganz besonders vorteilhaft ist die Katalysatorstruktur elektrisch leitfähig und stellt bei Anlegen eines Stroms, der durch die elektrisch leitfähige Struktur geleitet wird, eine Widerstandsheizung dar. Durch Kontrolle der in die Katalysatoreinrichtung abgegebenen elektrischen Leistung lässt sich die Temperatur der Katalysatoreinrichtung sehr einfach einstellen und gegebenenfalls durch Temperaturmessung oder dergleichen auch sehr einfach und nahezu verzögerungsfrei regulieren.

Vorteilhaft ist zumindest ein Teil der Katalysatorstruktur aus Pulver ausgebildet, vorteilhaft in Form eines gesinterten Pulvers. Gemäß einer Ausführungsform ist die gesamte Katalysatorstruktur aus dem Pulver ausgebildet, wobei ein Pulvergemisch mit räumlich unterschiedlicher oder räumlich homogener Gemischverteilung vorgesehen ist. Oder es wird bei einer anderen Ausführungsform eine katalytisch wirksame Oberflächenbeschichtung auf einer Tragstruktur der Katalysatorstruktur aufgebracht. Diese Oberflächenbeschichtung kann ebenfalls aus einem Pulvergemisch ausgebildet sein, das räumlich homogen verteilt ist oder bei der, beispielsweise in Abhängigkeit der Tiefe der Beschichtung, die Zusammensetzung variiert.

Die Verbindung der Pulverpartikel in der Beschichtung oder der Katalysatorstruktur erfolgt vorteilhaft durch Bindemittel, Klebemittel oder durch eine chemische Verbindung der Pulverbestandteile untereinander. Besonders vorteilhaft wird das Pulver mittels eines Sinterprozesses hergestellt, bei dem vorzugsweise Binde- und oder Härtermittel zugegeben sind.

Weist das Pulver metallische Anteile auf, so können diese durch eine Vernetzung der metallischen Anteile untereinander zur elektrischen Leitfähigkeit der Katalysatorstruktur führen oder zur elektrischen Leitfähigkeit beitragen. Alternativ oder zusätzlich sind die metallischen Anteile katalytisch aktiv, so dass beim Vorbeiströmen von Gasen an den metallischen Anteilen eine Zersetzung oder Umwandlung gasförmiger Bestandteile stattfindet. Die katalytisch wirksamen, metallischen Anteile können zumindest teilweise auch in Form metallorganischer Verbindungen vorliegen.

Ganz besonders Vorteilhaft umfasst die Katalysatorstruktur eine Metallstruktur, beispielsweise in Form von Drähten, Netzen, Gittern oder dergleichen, auf die eine katalytisch wirksame Oberfläche aufgebracht ist. Vorteilhaft ist dabei die Oberflächenbeschichtung eine Pulverbeschichtung, d.h. eine Beschichtung aus miteinander verbundenen Pulverteilchen oder Pulverteilchen, die in die Oberfläche der Metallstruktur eingebunden oder auf der Oberfläche der Metallstruktur gebunden sind.

Eine besonders hohe katalytische Wirkung wird erreicht, wenn die Oberflächenbeschichtung Keramikpartikel aufweist, in die wiederum katalytisch aktive Partikel, beispielsweise Edelmetallpartikel eingebunden sind.

Liegen die Pulverpartikel in Nanogröße vor, so wird ein sehr großes Oberflächen/Volumen-Verhältnis erreicht und insgesamt die Effizienz der katalytischen Wirkung stark erhöht. Auch vermindert der Einsatz von Nanopartikeln die Ablagerung von Rußpartikeln oder sonstigen Verbrennungsrückständen auf der Katalysatoreinrichtung.

Anhand von Figuren werden Ausführungsformen der Erfindung näher erläutert. Es zeigen:
- Fig. 1A, 1B und 1C: Querschnitte durch Heizleiter in verschiedenen Ausführungsformen,
- Fig. 2A, 2B und 2C: Querschnitte durch Heizstreifen in verschiedenen Ausführungsformen,
- Fig. 3A: ein Katalysatorgitter mit einem Heizleiter gemäß einem der Figuren 1A bis 1C,
- Fig. 3B: einen Querschnitt durch einen Katalysator mit zickzackförmigem Katalysatorgitter, und
- Fig. 3C: einen Querschnitt durch einen Katalysator mit spiralförmigem Katalysatorgitter.

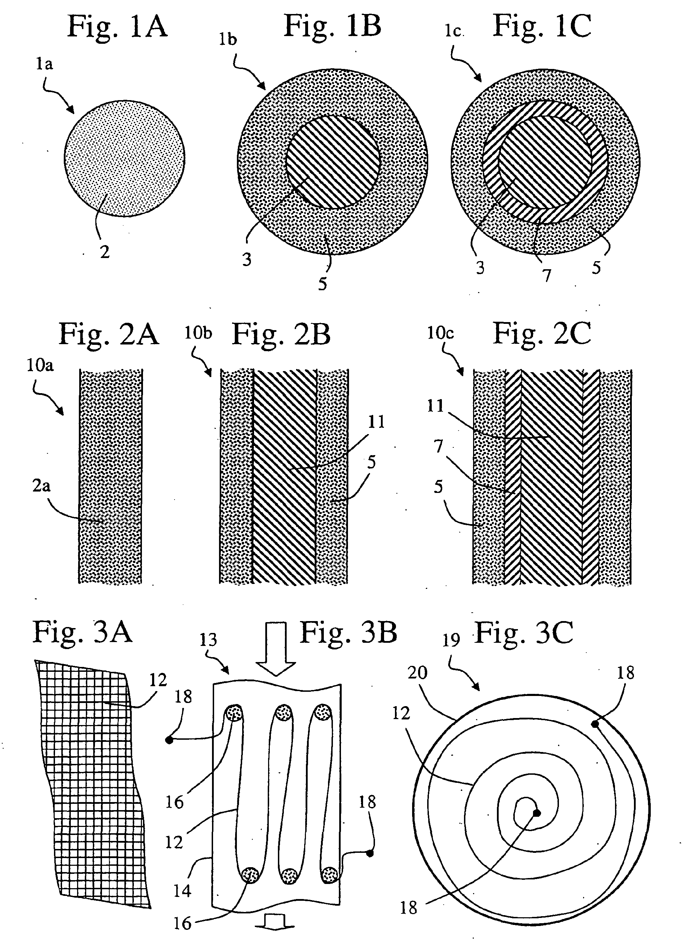

Fig. 1A zeigt eine erste Ausführungsform eines Heizleiters 1a, der aus einem gesinterten Draht 2 ausgebildet ist. Der Draht ist aus einem Pulvergemisch gesintert, das als funktionell wirksame Bestandteile ein Metallpulver, ein katalytisch wirksames Metallpulver, ein keramisches Pulver zum Ausbilden einer Keramikmatrix und zur Verbindung der Pulverbestandteile Haftvermittler oder sonstige Sinterzusätze aufweist. Die metallischen Bestandteile, die der Ausbildung der elektrischen Leitfähigkeit des Sinterdrahts 2 dienen, sind in einem hohen Anteil von über 40% des gesinterten Pulvergemisches vorhanden (die angegebenen Anteile beziehen sich auf den Gewichtsanteil). Beim Sintern bilden diese ein metallisches Netzwerk aus, das dem Sinterdraht 2 eine elektrische Leitfähigkeit zur Widerstandsheizung verleiht. Das elektrisch leitfähige Netzwerk wird beispielsweise durch Wolframpulver oder einem Legierungspulver aus Nickel, Chrom, Eisen und Titan hergestellt.

Die katalytisch wirksamen Bestandteile sind in einem geringen Mischanteil vorhanden, beispielsweise geringer 10%. Zur optimalen Entfaltung der katalytischen Wirksamkeit liegen die katalytisch wirksamen Bestandteile im fertiggesinterten Draht 2 eingebettet in einer Keramikumgebung vor, so dass diese gegenüber der elektrisch leitenden Netzwerkstruktur elektrisch isoliert sind. Um die Wahrscheinlichkeit der Einbettung der katalytisch wirksamen Bestandteile in die Keramikumgebung zu erhöhen, liegt der Keramikanteil im Gemisch im Bereich von 10% bis 60%. Die katalytisch wirksamen Bestandteile sind beispielsweise Platin oder Palladium oder ein Gemisch oder eine Legierung von diesen beiden Metallen.

Der Durchmesser des Sinterdrahts 2 (wie auch der in Fig. 1B und 1C dargestellten Heizleiter) liegt vorteilhaft im Bereich von 0,1 mm bis 1 mm, vorzugsweise im Bereich von 0,2 mm bis 0,5 mm Durchmesser. Bei den Heizleitern 1b und 1c von Fig. 1B und 1C ist eine Sinterschicht 5 auf einen Heizdraht 3 aufgesintert. Der Heizdraht 3 ist beispielsweise ein Wolfram- oder Platindraht oder eine Legierung von 49% Nickel, 46,5% Chrom, 3% Eisen und 0,6% Titan (Ungefährangaben). Die aufgesinterte Schicht 5 wird hergestellt aus einem Gemisch aus einem Keramikpulver und einem Pulver aus katalytisch wirksamem Material. Als keramisches Material für die Sinterschicht 5 oder als Anteil des Ausgangspulvers für den Sinterdraht 2 können beispielsweise Aluminiumoxid (AL₂O₃) oder Ceroxid (CeₓO) oder ein Gemisch davon zum Einsatz kommen.

In Ausgestaltung kann bei dem Ausgangsgemisch für den Sinterdraht 2 oder die Sinterschicht 5 anstelle eines Pulvergemisches aus Keramikpulver und katalytisch wirksamen Pulver ein Pulver zum Einsatz kommen, das wiederum aus einem Sintermaterial gewonnen wurde. Bei dem zu Pulver verarbeiteten Sintermaterial ist die katalytisch wirksame Substanz (wie beispielsweise Platin, Palladium, ein Gemisch von Platin und Palladium oder eine metallorganische Verbindung) in eine Keramikmatrix eingesintert. Diese Keramikmatrix kann beispielsweise aus Aluminiumoxid oder Ceroxid ausgebildet sein. Die Verwendung des vorgesinterten Pulvers hat den Vorteil, dass das eigentlich katalytisch wirksame Material in einer Clusterform bereits in eine Keramikmatrix eingebettet ist und somit die Wahrscheinlichkeit sinkt, dass beim Sinterprozess zur Herstellung der Sinterschicht 5 oder des Sinterdrahts 2 eine Verbindung zwischen den elektrisch leitfähigen Pulverbestandteilen und dem katalytisch wirksamen Clustern entsteht und so die katalytische Wirkung reduziert wird.

Fig. 1C zeigt einen Heizleiter 1c als Ausgestaltung des Heizleiters 1b, bei dem eine Haftvermittlerschicht 7 zwischen der katalytisch wirksamen Sinterschicht 5 und dem Heizdraht 3 angeordnet ist. Der Haftvermittler 7 kann selbst als Sinterschicht ausgebildet sein oder eine mittels anderer Verfahren hergestellte Beschichtung des Heizdrahtes 3 sein. Beispielsweise wird die Schicht 7 durch Aufdampfen einer Metallschicht auf den Heizdraht 3 ausgebildet. In dem Falle, dass die Haftvermittlerschicht 7 selbst eine Sinterschicht ist, kann deren Sinterprozess vor dem Ausbilden der Sinterschicht 5 stattfinden oder die Sinterung der Haftvermittlerschicht 7 wird zusammen mit dem Sintern der Schicht 5 ausgeführt.

Die Fig. 2A bis 2C zeigen Heizstreifen 10a, 10b, 10c, die analog der Heizleiter 1a, 1b, 1c ausgebildet sind. Anstelle der Drahtform liegen die Heizstreifen 10a, 10b, 10c in Streifenform vor. Fig. 2A zeigt eine Sinterplatte 2a, die analog zum Sinterdraht 2 ausgebildet wurde. Bei den Fig. 2B und 2C wird anstelle des Heizdrahts 3 eine streifenförmige Metallplatte 11 mit der Sinterschicht 5 und ggf. mit der Haftvermittlerschicht 7 beschichtet.

Fig. 3A zeigt als Katalysatorstruktur ein Katalysatorgitter 12, das aus einem Heizleiter 1a, 1b oder 1c gemäß der Figuren 1A, 1B oder 1C ausgebildet ist. Anstelle der Verbindung der Heizleiter zu einem Gitter kann bei den Ausführungen von Fig. 1B und 1C zunächst der Heizdraht 3 in Gitterform ausgebildet werden, bevor eine Beschichtung mit der Schicht 5 und ggf. zuvor mit der Schicht 7 erfolgt.

Die Fig. 3B und 3C zeigen die Verwendung des Katalysatorgitters 12 in einem Katalysator 13 bzw. 19. Beim Katalysator 13 von Fig. 3B wird das Gitter zickzackförmig um Keramikstützen 16 gefaltet, so dass innerhalb eines viereckigen Keramikrohres 14 bei kurzem Bauleiter eine große Oberfläche über das gefaltete Gitter 12 bereitgestellt wird. Durch die Pfeile ist die Durchströmungsrichtung durch das in Längsrichtung aufgeschnittene Keramikrohr 14 dargestellt. Die elektrische Spannung zum Beheizen des Katalysatorgitters 12 wird an den Enden des Gitters an den Anschlusspunkten 18 angelegt.

Fig. 3C zeigt einen Querschnitt quer durch ein Keramikrohr 20, in dem das Katalysatorgitter 12 spiralförmig aufgewickelt ist. Die elektrische Kontaktierung erfolgt wiederum an den Enden des Gitters 12 über Anschlusspunkte 18.

### BEZUGSZEICHENLISTE

- 1a,b,c: Heizleiter
- 2: Sinterdraht
- 2a: Sinterplatte
- 3: Heizdraht
- 5: Sinterschicht
- 7: Haftvermittler
- 10a,b,c: Heizstreifen
- 11: Metallplatte
- 12: Katalysatorgitter
- 13: Katalysator
- 14: Keramikrohr = Gehäuse
- 16: Stützen
- 18: Anschluss
- 19: Katalysator
- 20: Keramikrohr

## Patentansprüche

1. Katalysatoreinrichtung (12) für ein Haushaltsgerät mit einer Katalysatorstruktur (1b, 1c, 10c, 12), wobei die Katalysatorstruktur ein Heizelement ist und
zumindest an der Oberfläche eine katalytisch wirksame Oberflächenbeschichtung (5) aufweist, und
eine Metallstruktur (3, 11) ist oder eine Metallstruktur aufweist, die mit einer katalytisch wirksamen Oberflächenbeschichtung (5) beschichtet ist,
**dadurch gekennzeichnet, dass**
zwischen der Oberflächenbeschichtung (5) und der Metallstruktur (3, 11) ein Haftvermittler (7) angeordnet ist, oder
die Oberflächenbeschichtung (5) eine mit einem Haftvermittler durchsetzte Pulverbeschichtung ist.

2. Katalysatoreinrichtung nach Anspruch 1, wobei die Katalysatorstruktur (1b, 1c, 10c, 12) eine Widerstandsheizung ist.

3. Katalysatoreinrichtung nach Anspruch 1 oder 2, wobei die Katalysatorstruktur (1b, 1c, 10c, 12) zumindest teilweise aus miteinander verbundenem Pulver ausgebildet ist, insbesondere aus gesintertem Pulver (5).

4. Katalysatoreinrichtung nach Anspruch 3, wobei das Pulver (5) metallische Anteile aufweist, insbesondere metallische Cluster.

5. Katalysatoreinrichtung nach einem der vorhergehenden Ansprüche, wobei die Oberflächenbeschichtung (5) eine Pulverbeschichtung ist

6. Katalysatoreinrichtung nach Anspruch 5, wobei die Pulverbeschichtung (5) katalytisch aktive Pulverpartikel, insbesondere Metallpulverpartikel, und/oder isolierende Pulverpartikel aufweist.

7. Katalysatoreinrichtung nach Anspruch 6, wobei die Metallpulverpartikel Edelmetallpartikel sind und/oder die isolierenden Pulverpartikel Keramikpartikel sind.

8. Katalysatoreinrichtung nach Anspruch 5, 6 oder 7, wobei die Pulverpartikel der Pulverbeschichtung (5) zumindest teilweise vorgesinterte Pulverpartikel sind.

9. Katalysatoreinrichtung nach einem der Ansprüche 5 bis 8, wobei die Pulverpartikel Nanopartikel umfassen.

10. Katalysatoreinrichtung nach einem der vorhergehenden Ansprüche, wobei die katalytisch wirksame Oberflächenbeschichtung (5) zumindest ein Edelmetall aufweisen, insbesondere aus der Gruppe Platin, Palladium, Silber, Gold, Iridium, Rhodium, eine Legierung oder ein Gemisch aus Elementen der Gruppe.

11. Katalysatoreinrichtung nach einem der vorhergehenden Ansprüche, wobei die katalytisch wirksame Oberflächenbeschichtung (5) zumindest eine Keramik aufweisen, insbesondere aus der Gruppe Aluminiumoxid, Siliziumoxid, Ceroxid, Kohlenstoffnitrid, Bornitrid, Siliziumnitrid, eine zusammengesetzte Verbindung oder ein Gemisch aus Elementen dieser Gruppe.

12. Katalysatoreinrichtung nach einem der vorhergehenden Ansprüche, wobei der Haftvermittler (7) ein Metall, eine Pulverbeschichtung oder eine Pulverkeramikbeschichtung ist.

13. Katalysatoreinrichtung nach Anspruch 12, wobei das Metall Aluminium oder ein Edelmetall ist, insbesondere Palladium.

14. Katalysatoreinrichtung nach einem der Ansprüche 1 bis 13, wobei die Metallstruktur (3) aus einem Metall der Gruppe Nickel, Chrom, Eisen, Titan oder Wolfram ist, oder eine Legierung davon ist.

15. Katalysatoreinrichtung nach einem der vorhergehenden Ansprüche, wobei die Katalysatorstruktur (1b, 1c, 10c, 12) zumindest teilweise drahtförmig, bandförmig, netzförmig, plattenförmig oder flächig ausgebildet ist.

16. Katalysatoreinrichtung nach einem der vorhergehenden Ansprüche, wobei die Katalysatorstruktur (1b, 1c, 10c, 12) auf einer elektrisch isolierenden Tragstruktur (16) angeordnet oder mit dieser verbunden ist.

17. Katalysatoranordnung (13, 19) mit einem Gehäuse (14, 20) und einer darin angeordneten Katalysatoreinrichtung (12) nach einem der vorhergehenden Ansprüche.

18. Katalysatoranordnung nach Anspruch 17, wobei das Gehäuse (14, 20) einen Luftkanal ausbildet.

19. Katalysatoranordnung nach Anspruch 17 oder 18, wobei das Gehäuse (14, 20) elektrisch und/oder thermisch isolierend ist.

20. Katalysatoranordnung nach Anspruch 17, 18 oder 19, wobei das Gehäuse (14, 20) zumindest teilweise aus Keramik ausgebildet ist.

21. Katalysatoranordnung nach einem der Ansprüche 17 bis 20, wobei die Katalysatoreinrichtung (12) spiralförmig, zickzackförmig oder mäanderförmig angeordnet ist.

22. Haushaltsgerät mit einer Katalysatoreinrichtung (12) oder -anordnung (13, 19) nach einem der vorhergehenden Ansprüche.

23. Haushaltsgerät nach Anspruch 22, wobei die Katalysatoreinrichtung (12) eine Heizeinrichtung oder Teil einer Heizeinrichtung des Haushaltsgeräts ist.

24. Haushaltsgerät nach Anspruch 22 oder 23, wobei das Haushaltsgerät ein Ofen, eine Dunstabzugshaube, ein Trockner, eine Wäsche-Auffrischungseinrichtung oder ein Luftreiniger ist.

25. Verfahren zum Herstellen einer Katalysatoreinrichtung (12) für ein Haushaltsgerät,
wobei ein Pulvergemisch mit zumindest einer katalytisch wirksamen Pulverkomponente auf eine elektrisch leitende Grundstruktur (3, 11) aufgebracht und/oder aufgesintert wird;
**dadurch gekennzeichnet, dass**
vor dem Aufsintern des Pulvergemisches ein Haftvermittler (7) auf der elektrisch leitenden Grundstruktur (2, 11) aufgebracht wird.

26. Verfahren nach Anspruch 25, wobei das Pulvergemisch zumindest eine Keramikkomponente aufweist.

27. Verfahren nach Anspruch 25 oder 26, wobei die zumindest eine katalytisch wirksame Pulverkomponente ein Edelmetall aufweist.

28. Verfahren nach Anspruch 25, 26 oder 27, wobei die zumindest eine katalytisch wirksame Pulverkomponente ein vorgesintertes Pulver und/oder ein pulverisiertes Sintermaterial mit keramischen und metallischen Bestandteilen ist.

29. Verfahren nach einem der Ansprüche 25 bis 28, wobei der Haftvermittler (7) als metallische Zwischenschicht aufgebracht wird oder aus einem zweiten Pulvergemisch aufgesintert wird.

30. Verfahren nach Anspruch 29, wobei das zweite Pulvergemisch zumindest eine Keramikkomponente und/oder zumindest eine metallische Komponente aufweist.

31. Verfahren nach einem der Ansprüche 25 bis 30, wobei das Pulvergemisch ein Härtermittel und/oder ein Bindemittel aufweist.

## Claims

1. Catalyst device (12) for a domestic appliance having a catalyst structure (1b, 1c, 10c, 12), wherein the catalyst structure is a heating element and has at least on the surface, a catalytically effective surface coating (5), and is a metal structure (3, 11) or has a metal structure which is coated with a catalytically effective surface coating (5), **characterised in that** an adhesion promoter (7) is arranged between the surface coating (5) and the metal structure (3, 11), or the surface coating (5) is a powder coating interspersed with an adhesion promoter.

2. Catalyst device according to claim 1, wherein the catalyst structure (1b, 1c, 10c, 12) is a resistance heater.

3. Catalyst device according to claim 1 or 2, wherein the catalyst structure (1b 1c, 10c, 12) is formed at least partly from powder combined together, in particular from sintered powder (5).

4. Catalyst device according to claim 3, wherein the powder (5) has metallic portions, in particular metallic clusters

5. Catalyst device according to one of the preceding claims, wherein the surface coating (5) is a powder coating.

6. Catalyst device according to claim 5, wherein the powder coating (5) has catalytically active powder particles, in particular metal powder particles, and/or insulating powder particles.

7. Catalyst device according to claim 6, wherein the metal powder particles are noble metal particles and/or the insulating powder particles are ceramic particles.

8. Catalyst device according to claim 5, 6 or 7, wherein the powder particles of the powder coating (5) are at least partly pre-sintered powder particles.

9. Catalyst device according to one of claims 5 to 8, wherein the powder particles comprise nanoparticles.

10. Catalyst device according to one of the preceding claims, wherein the catalytically effective surface coating (5) has at least one noble metal, in particular from the group platinum, palladium, silver, gold, iridium, rhodium, an alloy or a mixture of elements of the group.

11. Catalyst device according to one of the preceding claims, wherein the catalytically effective surface coating (5) has at least one ceramic, in particular from the group aluminium oxide, silicon oxide, cerium oxide, carbon nitride, boron nitride, silicon nitride, a composite compound or a mixture of elements of this group.

12. Catalyst device according to one of the preceding claims, wherein the adhesion promoter (7) is a metal, a powder coating or a powder ceramic coating.

13. Catalyst device according to claim 12, wherein the metal is aluminium or a noble metal, in particular palladium.

14. Catalyst device according to one of claims 1 to 13, wherein the metal structure (3) is from a metal of the group nickel, chromium, iron, titanium or tungsten, or is an alloy thereof.

15. Catalyst device according to one of the preceding claims, wherein the catalyst structure (1b, 1c, 10c, 12) is formed at least partly in wire form, in tape form, in mesh form, in plate form or two-dimensional.

16. Catalyst device according to one of the preceding claims, wherein the catalyst structure (1b, 1c, 10c, 12) is arranged on an electrically insulating support structure (16) or is joined to the latter.

17. Catalyst arrangement (13, 19) having a housing (14, 20) and a catalyst device (12) arranged therein according to one of the preceding claims.

18. Catalyst arrangement according to claim 17, wherein the housing (14, 20) forms an air channel.

19. Catalyst arrangement according to claim 17 or 18, wherein the housing (14, 20) is electrically and/or thermally insulating.

20. Catalyst arrangement according to claim 17, 18 or 19, wherein the housing (14, 20) is formed at least partly of ceramic.

21. Catalyst arrangement according to one of claims 17 to 20, wherein the catalyst device (12) is arranged to be helical, like a zig-zag or meander.

22. Domestic appliance having a catalyst device (12) or catalyst arrangement (13, 19) according to one of the preceding claims.

23. Domestic appliance according to claim 22, wherein the catalyst device (12) is a heating device or part of a heating device of the domestic appliance.

24. Domestic appliance according to claim 22 or 23, wherein the domestic appliance is an oven, an extractor hood, a drier, a laundry-boosting device or an air purifier.

25. Method for producing a catalyst device (12) for a domestic appliance, wherein a powder mixture having at least one catalytically effective powder component is applied and/or sintered onto an electrically conductive base structure (3, 11); **characterised in that** before sintering-on the powder mixture, an adhesion promoter (7) is applied to the electrically conductive base structure (2, 11).

26. Method according to claim 25, wherein the powder mixture has at least one ceramic component.

27. Method according to claim 25 or 26, wherein the at least one catalytically effective powder component has a noble metal.

28. Method according to claim 25, 26 or 27, wherein the at least one catalytically effective powder component is a pre-sintered powder and/or a pulverised sintered material with ceramic and metallic constituents.

29. Method according to one of claims 25 to 28, wherein the adhesion promoter (7) is applied as a metallic intermediate layer or is sintered on from a second powder mixture.

30. Method according to claim 29, wherein the second powder mixture has at least one ceramic component and/or at least one metallic component.

31. Method according to one of claims 25 to 30, wherein the powder mixture has a hardening agent and/or a binder.

## Revendications

1. Dispositif catalyseur (12) pour un appareil ménager avec une structure de catalyseur (1b, 1c, 10c, 12), où la structure de catalyseur est un élément chauffant et présente au moins à la surface un revêtement de surface catalytiquement actif (5), et est une structure métallique (3, 11) ou présente une structure métallique qui est revêtue d'un revêtement de surface catalytiquement actif (5),
**caractérisé en ce qu'**est disposé entre le revêtement de surface (5) et la structure métallique (3, 11) un promoteur d'adhérence (7), ou bien que le revêtement de surface (5) est un revêtement de poudre mélangé avec un promoteur d'adhérence.

2. Dispositif catalyseur selon la revendication 1, dans lequel la structure de catalyseur (1b, 1c, 10c, 12) est un chauffage par résistance.

3. Dispositif catalyseur selon la revendication 1 ou 2, dans lequel la structure de catalyseur (1b, 1c, 10c, 12) est réalisée au moins partiellement en poudre jumelée, en particulier en poudre frittée (5).

4. Dispositif catalyseur selon la revendication 3, dans lequel la poudre (5) présente des parties métalliques, en particulier des amas métalliques.

5. Dispositif catalyseur selon l'une des revendications précédentes, dans lequel le revêtement de surface (5) est un revêtement en poudre.

6. Dispositif catalyseur selon la revendication 5, dans lequel le revêtement en poudre (5) comporte des particules de poudre catalytiquement actives, en particulier des particules de poudre métallique et/ou des particules de poudre isolante.

7. Dispositif catalyseur selon la revendication 6, dans lequel les particules de poudre métallique sont des particules de métaux nobles et/ou les particules de poudre isolante sont des particules de céramique.

8. Dispositif catalyseur selon la revendication 5, 6 ou 7, dans lequel les particules de poudre du revêtement de poudre (5) sont au moins partiellement des particules de poudre préfrittées.

9. Dispositif catalyseur selon l'une des revendications 5 à 8, dans lequel les particules de poudre comprennent des nanoparticules.

10. Dispositif catalyseur selon l'une des revendications précédentes, dans lequel le revêtement de surface (5) catalytiquement actif présente au moins un métal noble, en particulier du groupe de platine, palladium, argent, or, iridium, rhodium, un alliage ou un mélange d'éléments du groupe.

11. Dispositif catalyseur selon l'une des revendications précédentes, dans lequel le revêtement de surface (5) catalytiquement actif présente au moins une céramique, en particulier du groupe d'oxyde d'aluminium, oxyde de silicium, oxyde de cérium, nitrure de carbone, nitrure de bore, nitrure de silicium, un composite assemblé ou un mélange d'éléments de ce groupe.

12. Dispositif catalyseur selon l'une des revendications précédentes, dans lequel le promoteur d'adhérence (7) est un métal, un revêtement de poudre ou un revêtement céramique de poudre.

13. Dispositif catalyseur selon la revendication 12, dans lequel le métal est l'aluminium ou un métal noble, en particulier le palladium.

14. Dispositif catalyseur selon l'une des revendications 1 à 13, dans lequel la structure métallique (3) est en un métal du groupe de nickel, chrome, fer, titane ou tungstène, ou un alliage de ceux-ci.

15. Dispositif catalyseur selon l'une des revendications précédentes, dans lequel la structure de catalyseur (1b, 1c, 10c, 12) est réalisée au moins partiellement en forme de fil, en forme de bande, en forme de filet, en forme de plaque ou d'une manière plane.

16. Dispositif catalyseur selon l'une des revendications précédentes, dans lequel la structure de catalyseur (1b, 1c, 10c, 12) est disposée sur une structure de support (16) électriquement isolante ou est reliée à celle-ci.

17. Agencement catalyseur (13, 19) avec un boîtier (14, 20) et un dispositif catalyseur (12) disposé dans celui-ci selon l'une des revendications précédentes.

18. Agencement catalyseur selon la revendication 17, dans lequel le boîtier (14, 20) réalise un canal d'air.

19. Agencement catalyseur selon la revendication 17 ou 18, dans lequel le boîtier (14, 20) est électriquement et/ou thermiquement isolant.

20. Agencement catalyseur selon la revendication 17, 18 ou 19, dans lequel le boîtier (14, 20) est réalisé au moins partiellement en céramique.

21. Agencement catalyseur selon l'une des revendications 17 à 20, dans lequel le dispositif catalyseur (12) est agencé en forme de spirale, en forme de zigzag ou en forme de méandre.

22. Appareil ménager avec un dispositif catalyseur (12) ou agencement catalyseur (13, 19) selon l'une des revendications précédentes.

23. Appareil ménager selon la revendication 22, dans lequel le dispositif catalyseur (12) est une installation de chauffage ou une partie d'une installation de chauffage de l'appareil ménager.

24. Appareil ménager selon la revendication 22 ou 23, dans lequel l'appareil ménager est un four, une hotte aspirante, un séchoir, une installation de régénération de linge ou un dispositif d'épuration d'air.

25. Procédé de fabrication d'un dispositif catalyseur (12) pour un appareil ménager, dans lequel un mélange de poudres ayant au moins une composante de poudre catalytiquement active est appliqué sur la structure de base (3, 11) électriquement conductrice et/ou est fritté sur celle-ci ;
**caractérisé en ce qu'**avant le frittage du mélange de poudres, un promoteur d'adhérence (7) est appliqué sur une structure de base (2, 11) électriquement conductrice.

26. Procédé selon la revendication 25, dans lequel le mélange de poudres présente au moins une composante céramique.

27. Procédé selon la revendication 25 ou 26, dans lequel la composante de poudre catalytiquement active présente un métal noble.

28. Procédé selon la revendication 25, 26 ou 27, dans lequel la au moins une composante de poudre catalytiquement active est une poudre préfrittée et/ou un matériau de frittage pulvérisé avec des composants céramiques et métalliques.

29. Procédé selon l'une des revendications 25 à 28, dans lequel le promoteur d'adhérence (7) est appliqué comme une couche intermédiaire métallique ou est appliqué par frittage à partir d'un deuxième mélange de poudres.

30. Procédé selon la revendication 29, dans lequel le deuxième mélange de poudres présente au moins une composante céramique et/ou au moins une composante métallique.

31. Procédé selon l'une des revendications 25 à 30, dans lequel le mélange de poudres présente un durcisseur et/ou un liant.
